# EUROPÄISCHE PATENTSCHRIFT

(11) **EP 2 252 510 B1**
(45) Veröffentlichungstag und Bekanntmachung des Hinweises auf die Patenterteilung: **25.04.2012**
(21) Anmeldenummer: 09718688.6
(22) Anmeldetag: 16.02.2009
(51) Int. Cl.: B64D 11/06

(54) **VORRICHTUNG ZUM FESTLEGEN EINES GEGENSTANDES AN EINER SCHIENE**
DEVICE FOR FIXING AN OBJECT ON A RAIL
PROCEDE DE FIXATION D'UN OBJET SUR UN RAIL

(30) Priorität: 14.02.2008 DE 202008002107 U
(43) Veröffentlichungstag der Anmeldung: 24.11.2010
(73) Patentinhaber: allsafe Jungfalk GmbH & Co. KG, 78234 Engen (DE)
(72) Erfinder: LOHMANN, Detlef, 78234 Engen (DE)
(74) Vertreter: Weiss, Peter
(86) Internationale Anmeldenummer: PCT/EP2009/001073
(87) Internationale Veröffentlichungsnummer: WO 2009/112140

(56) Entgegenhaltungen:
- DE-U1- 29 825 000
- US-A- 5 489 172
- US-A1- 2002 048 495

## Beschreibung

Die Erfindung betrifft eine Vorrichtung zum Festlegen eines Gegenstandes an einer Schiene mit den Merkmalen des Oberbegriffs von Anspruch 1.

### STAND DER TECHNIK

In vielen Fällen des täglichen Lebens müssen Gegenstände festgelegt werden. Die vorliegende Erfindung bezieht sich - keineswegs einschränkend - auf die Festlegung von Gegenständen an Transportmitteln und insbesondere zum Festlegen von Fahr- bzw. Flugzeugsitzen. Hierzu ist beispielsweise aus der US 2006/0249616 A1 eine Vorrichtung bekannt, bei der von einem Gleitkörper, der auf eine Lochschiene aufgesetzt wird, Füsschen nach unten abragen, die mit einem Widerlagerabschnitt beim Verschieben des Gleitkörpers die Schiene untergreifen und dann mittels einer Schraube festgelegt werden. Dieses Schrauben bedeutet aber immer einen hohen Tätigkeitsaufwand. Des weiteren sind Klappergeräusche mit dieser Vorrichtung nicht zu vermeiden und die Sicherheit der Festlegung lässt sehr zu wünschen übrig.

Die WO 2009/015809 A2 betrifft ein Befestigungssystem zur schnell lösbaren Befestigung von Innenraumkomponenten in der Kabine eines Luftfahrzeugs umfasst ein Lochprofil und einen mit diesem lösbar verbindbaren Schnellwechselbeschlag. Das Lochprofil weist mindestens ein Befestigungsloch auf. Der Schnellwechselbeschlag umfasst ein Gehäuse, mindestens eine Riegelwippe mit einem endseitig daran angeordneten ersten Riegelvorsprung, einen zweiten Riegelvorsprung und einen in dem Gehäuse zwischen zwei Endstellungen verschiebbar geführten Stössel. Dieser weist einen Spreizkeil und mindestens eine Kulissenfläche mit einem Öffnungsnocken auf, wobei in der ersten Endstellung des Stössels der Spreizkeil zwischen die beiden Riegelvorsprünge ragt und diese auseinander spreizt, wohingegen in der zweiten Endstellung des Stössels ein an der Riegelwippe an dessen dem Riegelvorsprung gegenüberliegenden Endabschnitt angeordneter Gegennocken an dem Öffnungsnocken anliegt, der Spreizkeil aus dem Bereich zwischen den beiden Riegelvorsprüngen zurückgezogen ist und die beiden Riegelvorsprünge im wesentlichen aneinander anliegen.

Aus der DE 20 2005 004 134 U1 ist eine Vorrichtung der eingangs erwähnten Art bekannt, die vor allem zur Verwendung bei der Airline-Schiene dient. Dort hat sie sich als bestens geeignet erwiesen, sie ist allerdings nicht für eine Lochschiene anwendbar.

Zuletzt wird der Vollständigkeit halber auf die DE 298 25 000 U1 verwiesen, welche ebenfalls eine Vorrichtung zum Festlegen eines Gegenstandes an einer Schiene zeigt.

### AUFGABE

Aufgabe der vorliegenden Erfindung ist es, die Vorrichtung der o. g. Art so zu gestalten, dass ihre Verbindung mit der Schiene und ihre gesicherte Halterung an der Schiene wesentlich verbessert und ihre Handhabung erleichtert ist..

### LÖSUNG DER AUFGABE

Zur Lösung der Aufgabe führen die Merkmale des kennzeichnenden Teils von Anspruch 1.

Bevorzugt wird also die Unterstützung der Bewegung des Retainers in eine Riegellage durch einen Kraftspeicher. Aus diesem Grunde wird auch die Führung durch einen Schraubenbolzen mit einem Schraubenschaft bzw. Gewindeabschnitt und einem Schraubenkopf gebildet. Der Kraftspeicher, der sich einerseits gegen den Retainer abstützt, trifft andererseits auf den Schraubenkopf. Auf diese Weise kann der Retainer gegen die Kraft des Kraftspeichers angehoben werden, bewegt sich aber unter der Kraft des Kraftspeichers in Riegellage. Zu diesem Zweck ist auch der Retainer an der Führung bzw. dem Schraubenbolzen gleitbar geführt, sodass eine Ausnehmung in dem Retainer, die von dem Schraubenbolzen durchgriffen wird, in ihrem Durchmesser grösser ist, als der Durchmesser des Schraubenschaftes des Schraubenbolzens.

Die Bewegung des Retainers in seine Riegellage kann jedoch auch allein durch Schwerkraft erfolgen.

Die Festlegung der erfindungsgemässen Vorrichtung geschieht durch zumindest einen Fuss an dem Gleitkörper, von dem ein Widerlager zum Untergreifen von zumindest einem Teil der Schiene abragt. Dieser Fuss mit Widerlager wirkt mit Riegelstreifen an dem Retainer zusammen. Dabei soll der Riegelstreifen entlang dem Fuss an dem Gleitkörper geführt sein.

Der Zweck dieser Ausgestaltung ist, dass der Gleitkörper nach dem Einsetzen des Fusses mit Widerlager in die Ausnehmungen der Schiene geringfügig entlang der Schiene verschoben werden kann, sodass das Widerlager die Schiene untergreift. Dabei gelangt aber der Retainer selbst gleichzeitig in Riegellage, ohne dass hierzu eine eigene Tätigkeit notwendig ist. Beim Verschieben des Gleitkörpers gleitet der Retainer bzw. gleiten die entsprechenden Riegelelemente des Retainers solange auf der Schiene mit, bis die Riegelelemente des Retainers ebenfalls die ihnen zugeordneten Ausnehmungen in der Schiene erreichen. In diese gleiten dann die Riegelelemente selbsttätig ein, wobei diese Bewegung, wie oben erwähnt, von dem Kraftspeicher unterstützt wird. Für die Riegellage des Retainers bzw. der Riegelstreifen können an der Schiene eigene Ausnehmungen vorgesehen sein, in die der Riegelstreifen einfährt Bevorzugt soll aber zum Verriegeln die gleiche Ausnehmung dienen, in die auch der Fuss des Gleitkörpers eingreift. Das heisst, der Riegelstreifen fährt hinter dem Fuss in die Ausnehmung der Schiene ein, sodass sich das Widerlager nicht mehr aus der Riegellage befreien kann.

Um nun Klappergeräusche zu verhindern, sollte der Gleitkörper auf der Schiene verspannt werden. Dies geschieht bevorzugt mit dem Schraubenbolzen, der beim Drehen auf die Schiene drückt, wobei das Widerlager gegen die Schiene angezogen wird.

Damit aber auch der Retainer in der Riegellage festgelegt wird, bietet es sich an, auf. dem Retainer Erhebungen vorzusehen, auf die in Riegellage ein Drehplättchen aufgedreht wird. Dieses wird dann ebenfalls mit dem oben erwähnten Schraubenbolzen festgelegt, sodass sowohl Retainer als auch Gleitkörper klemmend gehalten werden. Ähnliches ist in der DE 20 2005 004 134 U1 beschrieben.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht einer erfindungsgemässen Vorrichtung zum Festlegen eines Gegenstandes an einer Schiene;
Figur 2 eine Draufsicht auf die Vorrichtung gemäss Figur 1;
Figur 3 einen Längsschnitt durch die Vorrichtung gemäss Figur 2 entlang Linie III-III.
Figur 4 eine perspektivische Ansicht der Vorrichtung gemäss Figur 1.

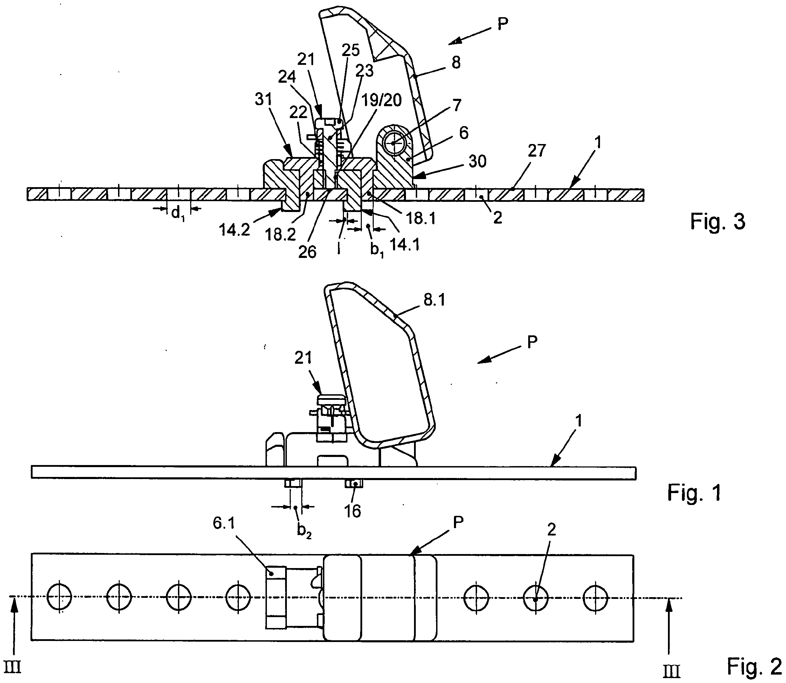

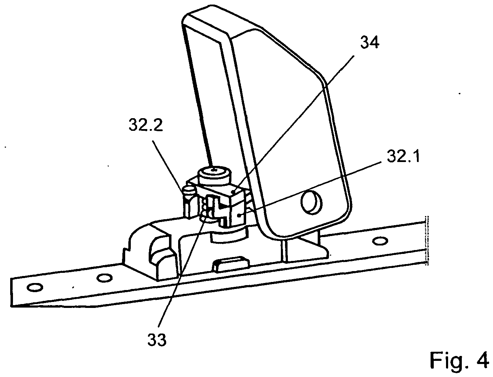

Gemäss den Figuren 1 bis 4 ist eine erfindungsgemässe Vorrichtung P zum Festlegen eines Gegenstandes an einer Schiene 1 dargestellt. Dabei handelt es sich, wie in Figur 2 und 3 deutlich zu erkennen, um einen Lochstreifen, wobei entsprechende Ausnehmungen 2 rund oder eckig sein können.

Die Vorrichtung P weist einen Gleitkörper 30 auf, der direkt der Schiene 1 aufsitzt und mit Füssen 14.1 und 14.2 in Ausnehmungen 2 der Schiene 1 eingreift. Von jedem Fuss 14.1 und 14.2 ragt ein Widerlager 16 in Schienenlängsrichtung ab.

Des weiteren bildet der Gleitkörper 30 eine Lagerstelle 6 für eine Schwenkachse 7 für eine Haube 8 aus. Die Schwenkachse 7 kann auch so ausgebildet sein, dass sie der Aufnahme eines Verbindungselementes zu dem durch die erfindungsgemässe Vorrichtung festzulegenden Gegenstand, z.B. zum Festlegen eines Fahrzeug- oder Flugzeugsitzes, dienen kann. Diese Festlegung kann aber auch an einer Lagestelle 6.1 geschehen.

Dem Gleitkörper 30 ist ein Retainer 31 zugeordnet. Dieser bildet wiederum zwei Riegelstreifen 18.1 und 18.2 aus, welche in Riegellage in entsprechende Ausnehmungen 2 der Schiene 1 eingreifen. Der Retainer 31 sitzt rittlings dem Gleitkörper 30 auf.

Der Riegelstreifen 18.1 bzw. 18.2 besitzt eine Breite bi. Der Fuss 14.1 bzw. 14.2 wiederum besitzt eine Breite b₂. Das Widerlager 16 besitzt eine Länge I. Die Breite b1 eines Riegelstreifens 18.1 bzw. 18.2 zzgl. der Breite b₂ eines Fusses 14.1 bzw. 14.2 entspricht in etwa dem Durchmesser d einer Ausnehmung 2 in der Schiene 1. Das heisst, wenn beide Elemente in der Ausnehmung 2 sitzen, muss das Widerlager 16 die Schiene 1 untergreifen. Auf diese Weise ist die Vorrichtung P an der Schiene festgelegt.

In eine Gewindebohrung 19 in dem Gleitkörper 30 ist ein Gewindeabschnitt 20 eines Schraubenbolzens 21 eingesetzt. Dieser durchsetzt auch eine Ausnehmung 22 in dem Retainer 31, wobei diese grösser ausgestaltet ist als ein Durchmesser eines Schraubenschaftes 23. Auf diese Weise ist der Retainer 31 gegenüber dem Gleitkörper 30 lose an dem Schraubenbolzen 21 geführt. Er stützt sich allerdings in dem bevorzugten Ausführungsbeispiel über eine Schraubenfeder 24 gegen einen Schraubenkopf 25 ab.

Die Funktionsweise der vorliegenden Erfindung ist folgende:

Zum Festlegen der erfindungsgemässen Vorrichtung P an der Schiene 1 werden die Füsse 14.1 und 14.2 mit ihren Widerlagern 16 in die Ausnehmungen 2 in der Schiene 1 eingesetzt. Dies bedeutet aber auch, dass die Riegelstreifen 18.1 und 18.2 noch nicht in die Ausnehmungen 2 einfahren können, sondern der gesamte Retainer 31 ist gegen die Kraft der Schraubenfeder 24 entlang dem Schraubenbolzen 21 angehoben und steht auch auf der Schiene 1 auf.

Nachdem die Füsse 14.1 und 14.2 gänzlich die entsprechenden Ausnehmungen 2 in der Schiene 1 durchgriffen haben, kann der Gleitkörper 30 nach links verschoben werden, wodurch die Widerlager 16 die Schiene 1 untergreifen. Beim Schieben wird aber auch der Retainer 31 mitgenommen, sodass die Riegelstreifen 18.1 und 18.2 in den Bereich von geöffneten Ausnehmungen 2 gelangen und so der Retainer 31 und mit ihm die Riegelstreifen 18.1 und 18.2 unter dem Druck der Schraubenfeder 24 hinter den Füssen 14.1 und 14.2 nach unten in die jeweilige Ausnehmung 2 gleiten, wodurch der Gleitkörper 30 und damit die gesamte erfindungsgemässe Vorrichtung verriegelt ist. Wird jetzt der Schraubenbolzen 21 tiefer in die Gewindebohrung 19 eingeschraubt, drückt eine Stirnfläche 26 des Schraubenbolzens 21 auf eine Oberfläche 27 der Schiene 1, wodurch der Gleitkörper 30 angehoben und die Widerlager 16 von unten her gegen die Schiene 1 gedrückt werden. Damit ist die gesamte Vorrichtung P auf der Schiene 1 auch verspannt, so dass es nicht zu Klappergeräuschen kommt.

Von dem Retainer 31 ragen noch neben dem Schraubenbolzen 21 seitlich zwei Erhebungen 32.1 und 32.2 auf, die jeweils drehsymmetrisch einen Anschlag 33 ausbilden. Auf diese Erhebungen 32.1 und 32.2 kann zum Festlegen des Retainers 31 in seiner Riegellage ein Drehplättchen 34 aufgeschwenkt werden, wie dies beispielsweise auch in der DE 20 2005 004 134 U1 gezeigt ist.

Zum Lösen der Vorrichtung P von der Schiene wird der Schraubenbolzen 21 gelöst, so dass die Klemmwirkung zwischen Widerlager 16 und Schiene 1 aufgehoben wird. Nunmehr wird der Retainer 31 gegen die Kraft der Schraubenfeder 24 in Richtung des Schraubenkopfes 25 hin verschoben. Hierdurch gelangen die Riegelstreifen 18.1 und 18.2 aus den Ausnehmungen 2 und geben den Gleitkörper 30 zum Verschieben nach rechts frei. Hierdurch gelangen die Widerlager 16 ausser Eingriff mit der Schiene 1 und können durch die Ausnehmungen 2 herausgezogen werden.

### Bezugszeichenliste

| | | | | | |
|---|---|---|---|---|---|
| 1 | Schiene | 34 | Drehplättchen | 67 | |
| 2 | Ausnehmung | 35 | | 68 | |
| 3 | Basiskörper | 36 | | 69 | |
| 4 | Unterfläche | 37 | | 70 | |
| 5 | | 38 | | 71 | |
| 6 | Lagerstelle | 39 | | 72 | |
| 7 | Schwenkachse | 40 | | 73 | |
| 8 | Haube | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | Fuss | 47 | | | |
| 15 | | 48 | | | |
| 16 | Widerlager | 49 | | b₁ | Breite von 18.1, 18.2 |
| 17 | | 50 | | b₂ | Breite von 14.1, 14.2 |
| 18 | Riegelstreifen | 51 | | d | Durchmesser von 2 |
| 19 | Gewindebohrung | 52 | | | |
| 20 | Gewindeabschnitt | 53 | | I | Länge von 16 |
| 21 | SchraubenbolzenlFührung | 54 | | | |
| 22 | Ausnehmung | 55 | | | |
| 23 | Schraubenschaft | 56 | | | |
| 24 | Schraubenfeder | 57 | | | |
| 25 | Schraubenkopf | 58 | | | |
| 26 | Stirnfläche | 59 | | | |
| 27 | Oberfläche | 60 | | | |
| 28 | | 61 | | | |
| 29 | | 62 | | P | Vorrichtung |
| 30 | Gleitkörper | 63 | | | |
| 31 | Retainer | 64 | | | |
| 32 | Erhebung | 65 | | | |
| 33 | Anschlag | 66 | | | |

## Patentansprüche

1. Vorrichtung zum Festlegen eines Gegenstandes an einer Schiene (1) mit einem Gleitkörper (30), der entlang der Schiene (1) bewegbar ist, wobei in zumindest eine Ausnehmung (2) in der Schiene (1) ein vom Gleitkörper (30) abstehender Fuss (14.1, 14.2) einragt und dem Gleitkörper (30) ein Retainer (31) zugeordnet ist, und wobei der Gleitkörper (30) eine Führung (21) aufweist, an welcher entlang der Retainer (31) ebenfalls zum Eingreifen in eine Ausnehmung (2) in der Schiene (1) führbar ist, wobei der Retainer (31) den Gleitkörper (30) verriegelt und von dem Retainer (31) zumindest ein Riegelstreifen (18.1, 18.2) abragt, welcher entlang dem Fuss (14.1, 14.2) an dem Gleitkörper (30) geführt ist,
**dadurch gekennzeichnet,**
**dass** die Bewegung des Retainers (31) in eine Riegellage durch einen Kraftspeicher (24) unterstützt ist.

2. Vorrichtung nach Anspruch 1, **dadurch gekennzeichnet, dass** die Führung ein Schraubenbolzen (21) mit einem Gewindeabschnitt (20) und einem Schraubenkopf (25) ist.

3. Vorrichtung nach Anspruch 2, **dadurch gekennzeichnet, dass** der Gewindeabschnitt (20) des Schraubenbolzens (21) in eine Gewindebohrung (19) in dem Gleitkörper (30) eingreift.

4. Vorrichtung nach Anspruch 2 oder 3, **dadurch gekennzeichnet, dass** der Schraubenbolzen (21) eine Ausnehmung (22) in dem Retainer (31) durchgreift, deren Durchmesser grösser ist als derjenige eines Schraubenschafts (23) des Schraubenbolzens (21).

5. Vorrichtung nach wenigstens einem der Ansprüche 2 bis 4, **dadurch gekennzeichnet, dass** sich der Kraftspeicher (24) zwischen Schraubenkopf (25) und Retainer (31) abstützt.

6. Vorrichtung nach wenigstens einem der Ansprüche 1 bis 5, **dadurch gekennzeichnet, dass** von dem zumindest einen Fuss (14.1, 14.2) ein Widerlager (16) zum Untergreifen von zumindest einem Teil der Schiene (1) abragt.

7. Vorrichtung nach wenigstens einem der Ansprüche 1 bis 6, **dadurch gekennzeichnet, dass** der Retainer (31) in seiner Riegellage festlegbar ist.

8. Vorrichtung nach wenigstens einem der Ansprüche 2 bis 7, **dadurch gekennzeichnet, dass** vom Retainer (31) gegen den Schraubenkopf (25) hin zumindest eine Erhebung (32.1,32.2) aufragt, auf die ein Drehplättchen (34) aufdrehbar ist.

9. Vorrichtung nach Anspruch 8, **dadurch gekennzeichnet, dass** die Erhebung (32.1,32.2) einen Anschlag (33) für das Drehplättchen (34) aufweist.

10. Vorrichtung nach Anspruch 8 oder 9, **dadurch gekennzeichnet, dass** das Drehplättchen (34) den Schraubenkopf (25) untergreift.

11. Vorrichtung nach wenigstens einem der Ansprüche 2 bis 10, **dadurch gekennzeichnet, dass** sich eine Stirnfläche (26) des Schraubenbolzens (21) gegen die Schiene (1) abstützt.

12. Vorrichtung nach wenigstens einem der Ansprüche 1 bis 11, **dadurch gekennzeichnet, dass** die Einheit aus Gleitkörper (30) und Retainer (31) von einer Haube (8) abdeckbar ist.

13. Vorrichtung nach Anspruch 12, **dadurch gekennzeichnet, dass** dem Gleitkörper (30) eine Lagerstelle (6) für die Haube (8) zugeordnet ist.

14. Vorrichtung nach wenigstens einem der Ansprüche 1 bis 13, **dadurch gekennzeichnet, dass** die Schiene (1) eine Lochschiene ist.

## Claims

1. A device for fixing an object to a rail (1), with a sliding body (30) which is movable along the rail (1), with a foot (14.1, 14. 2) which projects from the sliding body (30) projecting into at least one cutout (2) in the rail (1) and a retainer (31) being associated with the sliding body (30), and the sliding body (30) having a guide (21) along which the retainer (31) can likewise be guided for engaging in a cutout (2) in the rail (1), the retainer (31) locking the sliding body (30) and at least one locking strip (18.1, 18.2) protruding from the retainer (31), which strip is guided along the foot (14.1, 14.2) on the sliding body (30),
**characterised in that**
the movement of the retainer (31) into a locking position is supported by an energy storage mechanism (24).

2. A device according to Claim 1, **characterised in that** the guide is a screw bolt (21) with a threaded section (20) and a screw head (25).

3. A device according to Claim 2, **characterised in that** the threaded section (20) of the screw bolt (21) engages in a threaded bore (19) in the sliding body (30).

4. A device according to Claim 2 or 3, **characterised in that** the screw bolt (21) engages through a cutout (22) in the retainer (31), the diameter of which cutout is greater than that of a barrel (23) of the screw bolt (21).

5. A device according to at least one of Claims 2 to 4, **characterised in that** the energy storage mechanism (24) is supported between the screw head (25) and the retainer (31).

6. A device according to at least one of Claims 1 to 5, **characterised in that** an abutment surface (16) for engaging under at least part of the rail (1) protrudes from the at least one foot (14.1, 14.2).

7. A device according to at least one of Claims 1 to 6, **characterised in that** the retainer (31) can be fixed in its locking position.

8. A device according to at least one of Claims 2 to 7, **characterised in that** at least one raised section (32.1, 32.2) protrudes upwards from the retainer (31) towards the screw head (25), onto which raised section a small rotary plate (34) can be screwed.

9. A device according to Claim 8, **characterised in that** the raised section (32.1, 32.2) has a stop (33) for the rotary plate (34).

10. A device according to Claim 8 or 9, **characterised in that** the rotary plate (34) engages under the screw head (25).

11. A device according to at least one of Claims 2 to 10, **characterised in that** an end face (26) of the screw bolt (21) is supported against the rail (1).

12. A device according to at least one of Claims 1 to 11, **characterised in that** the unit consisting of the sliding body (30) and retainer (31) can be covered by a hood (8).

13. A device according to Claim 12, **characterised in that** a bearing point (6) for the hood (8) is associated with the sliding body (30).

14. A device according to at least one of Claims 1 to 13, **characterised in that** the rail (1) is a perforated rail.

## Revendications

1. Dispositif de fixation d'un objet sur un rail (1) avec un corps coulissant (30) qui est déplaçable le long du rail (1), dans au moins un évidement (2) dans le rail (1) pénétrant un pied (14.1, 14.2) faisant saillie du corps coulissant (30) et au corps coulissant (30) étant associé un dispositif de retenue (31), et le corps coulissant (30) présentant un guide (21) le long duquel peut être guidé le dispositif de retenue (31) également destiné à pénétrer dans un évidement (2) dans le rail (1), le dispositif de retenue (31) verrouillant le corps coulissant (30) et du dispositif de retenue (31) ressortant au moins une bande de verrouillage (18.1, 18.2) qui est guidée le long du pied (14.1, 14.2) au corps coulissant (30).
**caractérisé par le fait**
**que** le déplacement du dispositif de retenue (31) vers une position de verrouillage est assisté par un accumulateur de force (24).

2. Dispositif selon la revendication 1, **caractérisé par le fait que** le guide est un boulon fileté (21) avec un segment fileté (20) et une tête de vis (25).

3. Dispositif selon la revendication 2, **caractérisé par le fait que** le segment fileté (20) du boulon fileté (21) pénètre dans un alésage taraudé (19) dans le corps coulissant (30).

4. Dispositif selon la revendication 2 ou 3, **caractérisé par le fait que** le boulon fileté (21) traverse un évidement (22) dans le dispositif de retenue (31) dont le diamètre est supérieur à celui d'une tige de vis (23) du boulon fileté (21).

5. Dispositif selon au moins l'une des revendications 2 à 4, **caractérisé par le fait que** l'accumulateur de force (24) s'appuie entre la tête de vis (25) et le dispositif de retenue (31).

6. Dispositif selon au moins l'une des revendications 1 à 5, **caractérisé par le fait que** de l'au moins un pied (14.1, 14.2) fait saillie un palier de butée (16) destiné à venir en prise par-dessous au moins une partie du rail (1).

7. Dispositif selon au moins l'une des revendications 1 à 6, **caractérisé par le fait que** le dispositif de retenue (31) peut être fixé dans sa position de verrouillage.

8. Dispositif selon au moins l'une des revendications 2 à 7, **caractérisé par le fait que** du dispositif de retenue (31) s'élève, contre la tête de vis (25), au moins un rehaussement (32.1, 32.2) sur laquelle peut être montée une plaquette rotative (34).

9. Dispositif selon la revendication 8, **caractérisé par le fait que** le rehaussement (32.1, 32.2) présente une butée (33) pour la plaquette rotative (34).

10. Dispositif selon la revendication 8 ou 9, **caractérisé par le fait que** la plaquette rotative (34) vient en prise par-dessous de la tête de vis (25).

11. Dispositif selon au moins l'une des revendications 2 à 10, **caractérisé par le fait qu'**une face avant (26) du boulon fileté (21) s'appuie contre le rail (1).

12. Dispositif selon au moins l'une des revendications 1 à 11, **caractérisé par le fait que** l'unité de corps coulissant (30) et de dispositif de retenue (31) peut être recouverte par un capot (8).

13. Dispositif selon la revendication 12, **caractérisé par le fait qu'**au corps coulissant (30) est associé un endroit de montage (6) du capot (8).

14. Dispositif selon au moins l'une des revendications 1 à 13, **caractérisé par le fait que** le rail (1) est un rail perforé.
